# EUROPÄISCHE PATENTANMELDUNG

(11) **EP 4 581 926 A1**
(43) Veröffentlichungstag der Anmeldung: **09.07.2025**
(21) Anmeldenummer: 24207838.4
(22) Anmeldetag: 21.10.2024
(51) Int. Cl.: A01K 1/02

(54) **FERKELKASTEN-DECKEL UND SEINE VERWENDUNG**

(30) Priorität: 08.11.2023 CH 12342023
(71) Anmelder: ATX Suisse GmbH, 6294 Ermensee (CH)
(72) Erfinder: Bucher, Patrick, 6280 Hochdorf (CH); Odermatt, Patrik, 6280 Hochdorf (CH)
(74) Vertreter: Felber, Josef

(57) **Zusammenfassung**

Die Erfindung betrifft einen Ferkelkastendeckel (2) für einen Ferkelkasten (1) für dessen Wärmemanagement, wobei der Deckel mit einem Heizkörper (3) an seiner Unterseite (4) ausgestattet ist. An dieser Unterseite (4) ist eine Blende (11) angeordnet, an welcher ein Vorhang (5) hängt, der unten in Streifen (6) ausläuft. Als Besonderheit bestehen sämtliche Seiten des Kastens (1), das heisst sein Boden, alle Seitenwände und sein Kastendeckel (2) aus hohlen Polypropylen-Platten. Diese sind miteinander verschweisst. Die Blende (11) besteht ebenfalls aus einer hohlen Polypropylen-Platte und ist mit einer Stirnseite an die Unterseite (4) des Kastendeckels (2) angeschweisst ist, mit umlaufenden durchgehenden Schweissnähten. Aus ihrer unteren Stirnseite ist vorteilhaft eine Nut ausgefräst. Der Vorhang bildet oben eine Schlaufe, in die ein Rohr eingesteckt ist, und diese Schlaufe kann mitsamt dem Rohr in die Nut eingeführt werden. Der Vorhang kann bedarfsweise rasch um die Blende umgeschlagen und gesichert werden, oder an ihr hochgezogen werden.

## Beschreibung

Die vorliegende Erfindung betrifft einen Deckel für einen Ferkelkasten für die Aufzucht von Ferkeln. Ein solcher Ferkelkasten wird in den einschlägigen Kreisen oftmals auch als Ferkelnest bezeichnet. Ein solcher Ferkelkasten weist einen Heizkörper, vorteilhaft eine elektrische Infrarot Heizplatte oder manchmal auch eine Warmwasserheizung an der Unterseite des Ferkelkasten-Deckels auf und/oder eine besondere Vorhanganordnung zur thermischen Abschottung für den Bereich der Abferkelung. Diese Ferkelkästen dienen der Aufzucht von Frischferkeln ab Geburt, während der Säugezeit, Aufzucht bis 25 kg und teilweise im Vormastbereich bis 65 kg.

In der Ferkelproduktion wird die Wirtschaftlichkeit des Verfahrens in erster Linie über die Anzahl der erzeugten Ferkel je Sau und Jahr bestimmt. Es werden gesunde, frohwüchsige Tiere in einem einheitlichen Wurf angestrebt. Ein Grossteil der Ferkelverluste konzentriert sich auf die ersten Lebenstage der Tiere. Hier gilt es, den Ferkeln optimale Startbedingungen zu schaffen, wobei die Klimagestaltung im unmittelbaren Umfeld der Tiere eine wesentliche Rolle spielt, vor allem bezüglich der angebotenen Wärme. Das Thermoregulationsvermögen von neugeborenen Ferkeln muss sich innerhalb der ersten Lebenswochen erst aufbauen, so dass sie gegenüber niedrigen Temperaturen sehr anfällig sind. Die Reserven an Glykogen (tierische Stärke) in der Leber der frisch geborenen Tiere sind äusserst gering. Eine nennenswerte Produktion findet erst ca. ab dem 7. Lebenstag statt (Eich, Schmidt, 1998). Kommt es zu einer Unterkühlung der Tiere, so werden die vorhandenen Leberstärkereserven schnell aufgebraucht. Bei wesentlich zu niedrig liegenden Umgebungstemperaturen kann auch der Tod der Tiere die Folge sein (zentralnervöse Störungen, schlafsüchtige Ferkel). Daher gehört zu einer optimalen Haltungsumwelt ein geschützter und ausreichend temperierter Ferkelbereich (Ferkelnest). Die Ferkel erhalten die Möglichkeit, sich hier zum Ruhen (75 - 80 % der Tageszeit) vom Bewegungsbereich der Sau zurück zu ziehen. In diesem Bereich sollen die Ferkel, geschützt gegen Erdrückungsgefahr, gleichmässig, permanent und ausreichend mit Wärme versorgt werden. Die aufgenommene Nahrungsenergie soll möglichst "verlustarm" für die tägliche Gewichtszunahme der Ferkel zur Verfügung stehen (vgl. Baey-Ernsten, 1995). In nicht eingestreuten Haltungssystemen wird von einem Temperaturbedarf der Ferkel von 36-40°C zum Zeitpunkt der Geburt ausgegangen. Im Laufe der ersten 2-4 Lebenswochen sinkt dieser Bedarf dann auf rund 28°C Umgebungstemperatur. Als Wärmesysteme kommen Strahlungsheizungen, etwa Elektro-Infrarotstrahler, Gasstrahler oder Flächenstrahler zum Einsatz, und auch elektrische oder warmwasserbeheizte Bodenheizungen. Ein Infrarot-Deckenheizstrahler in Kombination mit einem isolierten Boden eignet sich indessen am besten als Heizkörper. Alle diese Systeme haben jeweils spezifische Vor- und Nachteile. Rückschlüsse auf die korrekte Temperierung des Nestbereiches können insbesondere aufgrund des Liegeverhaltens der Ferkel gezogen werden. Im Idealfall liegen die Ferkel im Nest in der Seitenlage nebeneinander.

Herkömmliche Ferkelkästen und deren Deckel haben noch verbesserungsfähige Mängel. Je besser die Wärmeisolation eines Ferkelkastens ist, umso tiefer fallen die Heizkosten aus. Die Wärme steigt auf und somit ist der Deckel des Ferkelkastens entscheidend für die Wärmeisolation. Je intelligenter die Ferkelkästen und ihre Deckel konstruiert sind, umso kostengünstiger und dauerhafter können sie hergestellt werden. Die Ferkel bevorzugen kühlere Atemluft und deshalb weisen viele Ferkelkästen in Bodennähe eine rechteckige Öffnung auf, die sich über die ganze Länge des Ferkelkastens erstreckt, und durch welche die Ferkel ihre Nase nach draussen strecken können, um kühlere Aussenluft zu atmen, während das Innere des Ferkelkastens auf einer Temperatur von 36°C bis 40°C aufgeheizt gehalten wird. In den überwiegenden Fällen wird eine elektrische Heizung betrieben, mit entsprechenden Stromkosten. Beim Betrieb eines einzigen, gut Isolierten und mit einem isolierenden Vorhang ausgestatteten Ferkelkastens kann während der Säugezeit mit wesentlich tieferen Stromkosten gerechnet werden als mit einem blossen Betrieb einer Wärmelampe. Die Ferkel bleiben dabei bis zu 30 Tage im geheizten Bereich, bis sie den Ferkelkasten für die weitere Aufzucht und anschliessende Mast verlassen. Wenn eine Vielzahl von Ferkelkästen eingesetzt werden, so summieren sich diese Kosten übers Jahr, und ein grösserer Zuchtbetrieb kann übers Jahr ohne Weiteres Tausende von CHF an Energiekosten einsparen, wenn optimal isolierte Ferkelkästen eingesetzt werden. Durch gut isolierte Ferkelkästen kann die Stalltemperatur tiefer gehalten werden. Die Schadgaskonzentration wird auch tief gehalten, was der Gesundheit der Tiere und Menschen förderlich ist.

Aus der EP 2 599 383 B1 ist ein Ferkelkasten mit einem wärmeisolierenden Vorhang bekannt geworden. Dieser dient dazu, die Wärmeisolation der Ferkelkiste zu optimieren, und dieser Vorhang ist auch einfach auswechselbar. Ausserdem ist die Zugänglichkeit des Ferkelkastens für das Ausmisten, Einstreuen und für die Tierkontrolle gegeben.

Dieser Ferkelkasten und namentlich sein Deckel weist aber immer noch wesentliches Verbesserungspotential auf. Insbesondere kann im Bereich der Abferkelung der Vorhang nicht mit einem einzigen Handgriff so entfernt werden, dass die Wärme mit weniger Widerstand in die angrenzende Bucht der Muttersau strömen kann. Gerade wenn eine Vielzahl von Ferkelkästen betreut werden müssen, so zählt jeder vermeidbare Arbeitsschritt, jeder vermeidbare Handgriff, um Arbeitszeit und somit Kosten einzusparen. Und auch das zum Bau verwendete Material wirkt sich stark auf die Endkosten eines Ferkelkastens aus. Auch die Art und Weise der Heizung fällt in Bezug auf die Kosten stark ins Gewicht. Gefragt ist ein Ferkelkasten mit zugehörigem Ferkelkasten-Deckel mit längerer Lebensdauer, mit noch einfacherer Herstellung und Handhabung im Betrieb, und mit einer hocheffizienten Heizung mit niedrigem Stromverbrauch gepaart mit einer optimalen Wärmeisolation des Ferkelkastens. Bedarfsweise soll Wärme aus dem Ferkelkasten in die angrenzende Muttersauen-Bucht geleitet werden können.

Es ist deshalb die grundsätzliche Aufgabe der vorliegenden Erfindung, einen Ferkelkasten-Deckel für ein verbessertes Wärmemanagement zu schaffen, auch in Verbindung mit einer optional angrenzenden Muttersauen-Bucht, und die Mittel hierzu anzugeben. Das Wärmemanagement soll die ganze Periode abdecken, welche typischerweise mit einem Tag oder zwei Tagen vor der Abferkelung beginnt, dann für die Abferkelung und die anschliessende Periode bis die Ferkel nicht mehr säugen, und schliesslich bis sie ihre 25 kg Lebendgewicht erreicht haben. Die Erfindung will dazu den Mängeln der bekannten Ferkelkästen und ihrer Deckel abhelfen und namentlich folgende Problembereiche besser lösen: Erstens soll nicht nur der Ferkelkasten rundum aus gut wärmeisolierendem, leichten, hygienisch vorteilhaften und dauerhaften Material hergestellt sein, sondern auch der Ferkelkasten-Deckel, und er soll möglichst einfach, mit wenig Arbeitsschritten und kostengünstig herstellbar sein, und der Vorhang zur thermischen Abgrenzung des Ferkelkastens soll einfach und kostengünstig montierbar sein. Zweitens soll im Bereich der Abferkelung der wärmeisolierende Vorhang am Ferkelkasten-Deckel zwischen dem Innern des Ferkelkastens und der anschliessenden Bucht für die Muttersau bedarfsweise möglichst einfach und rasch entfernbar sein, sodass Wärme aus dem Ferkelkasten mit weniger Widerstand nach draussen und somit in die angrenzende Bucht der Muttersau strömen kann, und der Vorhang soll ebenso einfach wieder in Position für die thermische Abschottung des Innern des Ferkelkastens gebracht werden können. Es versteht sich, dass sich eine solche Lösung für das Wärmemanagement auch im Bereich von Ferkelkästen im Aufzucht-Bereich einsetzen lässt. Weiter soll die Heizung noch weiter verbessert werden, mit effizienterer Heizleistung mit möglichst tiefem Stromverbrauch, und ohne dass die Wärme der Heizung den Ferkelkasten-Deckel verziehen kann oder sonst wie schädigen kann. Dabei soll die Wärmeisolation des Ferkelkastens, die Auswechselbarkeit des Vorhanges, sowie die Zugänglichkeit des Ferkelkastens für das Ausmisten, Einstreuen und für die Tierkontrolle erhalten bleiben. Dieser Ferkelkasten-Deckel soll auch gesondert verwendbar sein, zur Schaffung von thermisch optimierten Ferkelbereichen in konventionellen Stallungen.

Diese Aufgabe wird gelöst von einem Ferkeldeckel-Kasten mit den Merkmalen gemäss dem Anspruch 1. Weiter lösen die Aufgabe ein Ferkelkasten nach Anspruch 8 sowie eine Verwendung nach den Ansprüchen 9 und 10.

Anhand der Zeichnungen wird eine beispielsweise Ausführung dieses Ferkelkastens gezeigt und nachfolgend anhand dieser Zeichnungen beschrieben und die Funktion der einzelnen Teile wird erklärt.

Es zeigt:
- Figur 1 :: Den Ferkelkasten mit zugeklapptem, geschlossenen Deckel;
- Figur 2 :: Den Ferkelkasten mit zugeklapptem, geschlossenen Deckel von einer Stirnseite her gesehen;
- Figur 3 :: Den Ferkelkasten nach Figur 2 mit eingesetztem Wärme-Leitbrett für die Wärmezufuhr in die angeschlossene Muttersauen-Bucht;
- Figur 4 :: Einen Blick über die Muttersauen-Bucht hinweg gegen die Rückseite des angeschlossenen Ferkelkasten, mit unten dem Durchgang für die Ferkel;
- Figur 5 :: Den Ferkelkasten mit fast senkrecht aufgeklapptem Deckel und an seiner Unterseite die von ihr abstehende Blende und am unteren Rand dieser Blende den dort angesetzten Vorhang;
- Figur 6 :: Den Ferkelkasten mit weiter aufgeklapptem Deckel und nach oben auf die Blende umgeschlagenen Vorhang;
- Figur 7 :: Den unteren Bereich der Blende mit der daraus ausgefrästen Nut und dem eingesetzten Halterohr für den Vorhang;
- Figur 8 :: Den unteren Bereich der Blende mit der daraus ausgefrästen Nut in einer Ansicht von der Seite her gesehen, mit nach unten hängendem Vorhang;
- Figur 9 :: Den nach oben um die Blende umgeschlagenen und arretierten Vorhang;
- Figur 10 :: Einen Blick von der Muttersau-Bucht aus gesehen in den Ferkelkasten bei hochgeschwenktem Vorhang;
- Figur 11 :: Einen Ferkelkasten mit aufgeschwenktem Deckel und einer Klemmstange an der Blende für das Umschlagen des Vorhanges;
- Figur 12 :: Den Ferkelkasten nach Figur 11 mit der Klemmstange an der Blende um erste ca. 45° geschwenkt;
- Figur 13 :: Den Ferkelkasten nach Figur 11 mit der Klemmstange an der Blende um ca. 90° geschwenkt;
- Figur 14 :: Den Ferkelkasten nach Figur 11 mit der Klemmstange an der Blende um ca. 135° geschwenkt;
- Figur 15 :: Den Ferkelkasten nach Figur 11 mit der Klemmstange an der Blende um 180° geschwenkt zum Umschlagen und Halten des Vorhangs;
- Figur 16 :: Den Ferkelkasten nach Figur 11 mit der Klemmstange an der Blende um 180° geschwenkt und mit dem umgeschlagenen, gehaltenen Vorhang von schräg vorne gesehen;

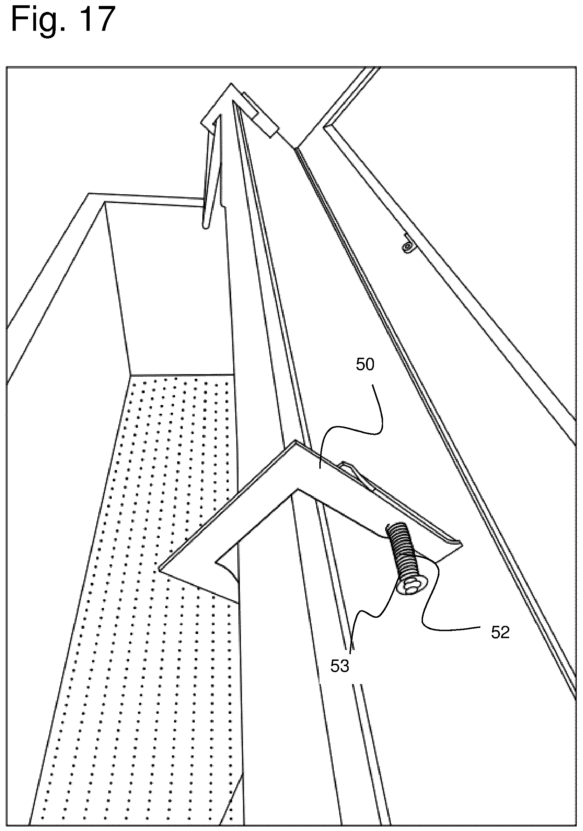

- Figur 17 :: Den Ferkelkasten nach Figur 11 mit dem umgeschlagenen, gehaltenen Vorhang in einer Ansicht von oben auf die Blende;
- Figur 18 :: Den Ferkelkasten mit dem umgeschlagenen Vorhang in einer Ansicht schräg von hinten in den Ferkelkasten hinein gesehen;
- Figur 19 :: Den Ferkelkasten wie in Figur 18 gezeigt, aber mit abgeschwenktem Wärmeleit-Brett, zur Umleitung der Wärme in die Muttersauen-Bucht;
- Figur 20 :: Einen Ferkelkasten-Deckel mit Blende und mit alternativer Einrichtung zum Hochziehen des Vorhanges;
- Figur 21 :: Den Ferkelkasten-Deckel mit Blende nach Figur 20 mit hochgezogenem Vorhang;
- Figur 22: Den Ferkelkasten-Deckel mit Blende nach Figur 20 mit abgesenktem Vorhang in einer Seitenansicht;
- Figur 23 :: Den Ferkelkasten-Deckel mit Blende nach Figur 20 mit hochgezogenem Vorhang in einer Seitenansicht;
- Figur 24 :: Einen Ferkelkasten mit aufgeschwenktem Deckel und Klemmstange zum Festhalten des nach oben umgeschlagenen Vorhangs
- Figur 25: Den Ferkelkasten mit aufgeschwenktem Deckel und Klemmstange nach Figur 24, aber von der anderen Seite her gesehen, mit frei hängendem Vorhang;
- Figur 26: Einen aufgeschwenkten Ferkelkasten-Deckel mit Blende und darauf umgeschlagenem Vorhang mit Gummizug zu seiner Sicherung;
- Figur 27 :: Einen Ferkelkasten-Deckel mit Blende, mit klappbarem Regalhalter-Elementen zum Aufschwenken und Halten des Vorhangs mit Regalhaltern;
- Figur 28 :: Einen Ferkelkasten-Deckel mit Heizelement und Blende, zum Anbauen an einen herkömmlichen Ferkelkasten für den Mastbetrieb.

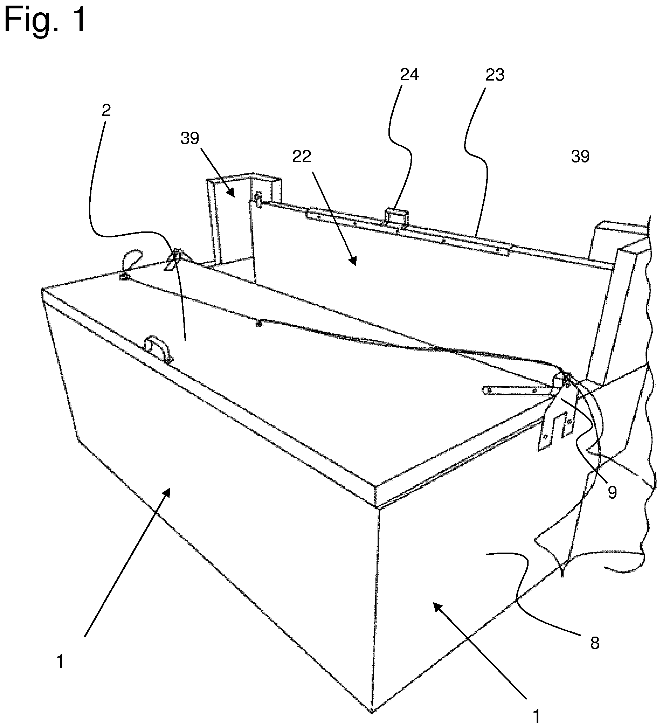

In Figur 1 ist der Ferkelkasten 1 in geschlossenem Zustand gezeigt, das heisst mit dem darauf abgeschwenkten Kasten bzw. Kastendeckel 2. Dieser Kastendeckel 2 ist hier mit zwei Scharnieren 9, die an den Seitenwänden 8 des Ferkelkastens 1 an demselben montiert sind, schwenkbar gelagert. Hinter dem eigentlichen Ferkelkasten 1 erkennt man an den nach hinten verlängerten Seitenwänden beidseits nach oben abstehende Rahmenecken 39, die den Kasten 1 nach oben überragen. Daran geführt ist ein Wärmeleit-Brett 22, das lose an diesen Rahmenecken 39 geführt ist. Oben ist es mit einer Griffleiste 23 ausgerüstet und daran befindet sich ein Griff 24.

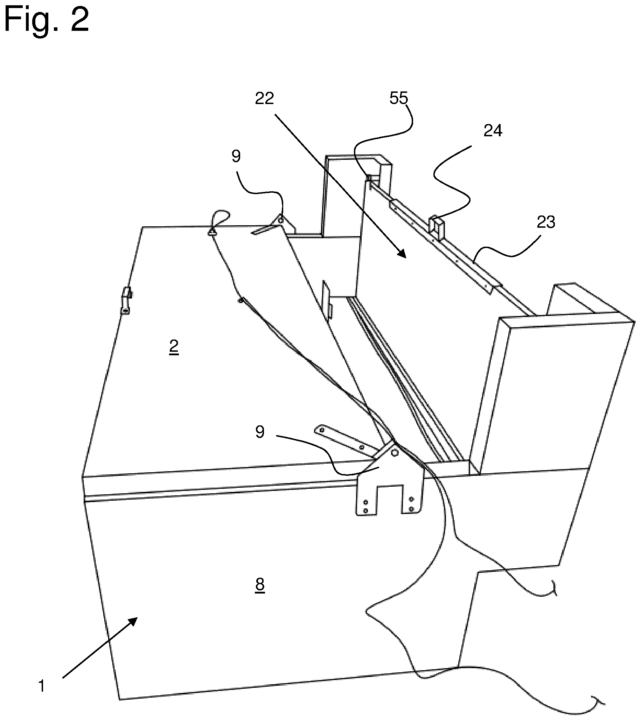

Die Figur 2 zeigt den Ferkelkasten in einer Ansicht von der Seite und von schräg oben her gesehen. Das Wärmeleit-Brett 22 erlaubt es, erstens, bei Bedarf die Wärme aus dem Ferkelkasten 1 unter dem Wärmeleit-Brett 22 hindurch nach hinten in die anschliessende Muttersauen-Bucht zu leiten, und zweitens, den Durchgang der Ferkel vom Innern des Ferkelkasten 1 nach draussen in die dahinter anschliessende Muttersauen-Bucht bedarfsweise zu verschliessen. Dazu kann dieses Wärmeleit-Brett am Griff 24 erfasst werden, seine Sicherung 55 wird gelöst und es kann hernach nach vorne geschwenkt werden, oder auch angehoben und hernach in einer Führung senkrecht nach unten auf den Boden abgestellt werden, zum Verschliessen des Durchgangs vom Ferkelkasten in die angrenzende Muttersauen-Bucht.

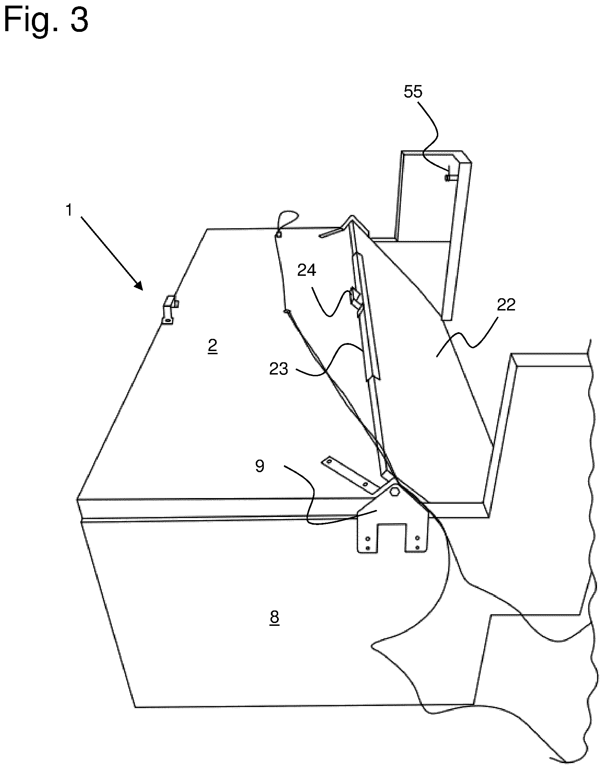

In Figur 3 ist das Wärmeleit-Brett 22 in eine schiefwinklige Position gebracht und schliesst mit seinem oberen Rand an den hinteren Rand des Deckels des Ferkelkastens 1 an. In dieser Position des Wärmeleit-Brettes 22 strömt die Wärme aus dem Ferkelkasten 1 nicht mehr hinter ihm frei nach oben, sondern strömt unter dem Wärmeleit-Brett 22 hindurch zur hinten an den Ferkelkasten 1 anschliessenden Muttersauen-Bucht.

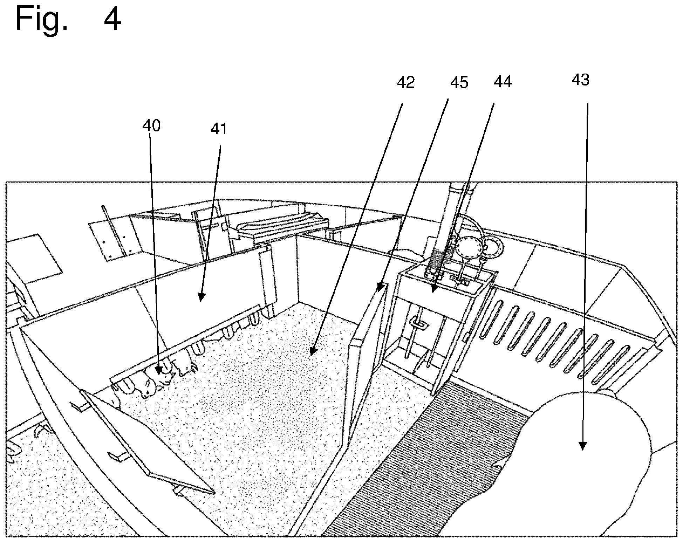

Die Figur 4 zeigt die herkömmliche Muttersauen-Bucht 42 in einer perspektivischen Ansicht, mit Blick gegen den vor ihr, das heisst hier im Bild hinter ihm angeschlossenen Ferkelkasten hin gesehen. Der Durchgang 40 zum Ferkelkasten ist längs des unteren Randes der Buchtenwand 41 sichtbar, die dort nicht ganz bis zum Boden hinab reicht. Und dort erkennt man auch einige Ferkel, welche ihre Nase aus dem Ferkelkasten in den Vorhof strecken, weil da eine kühlere Luft vorherrscht, die für sie angenehmer zum Atmen ist. Vorne rechts im Bild erkennt man einen Teil der Muttersau 43. Die Futterstation und Tränke 44 befindet sich hier neben einer Leitwand 45 für die Muttersau 43, sodass sie neben dieser Leitwand 45 stehen muss, um an der Futterstation 44 zu fressen. Damit wird auch sichergestellt, dass sie mit ihrem Hinterteil auf einem Bodengitter steht, sodass ihr Urin- und Kot-Abgang direkt durch dieses Gitter abgeht.

Das gemäss der vorliegenden Erfindung Besondere findet sich am Ferkelkasten 1. Die Herausforderungen beim Bau eines Ferkelkastens 1 sind zahlreich. Er soll möglichst gut wärmeisolierend und hygienisch sein. Seine Wände und sein Deckel müssen also aus hoch-wärmeisolierendem Material bestehen. Trotzdem muss er eine hinreichende Stabilität gewährleisten. Des Weiteren muss das Material die Temperaturen von bis zu ca. 80°C aushalten können und unter diesem Temperatureinfluss nicht weich werden. Das Material muss einfach verarbeitbar sein und es soll sich um langlebiges Material handeln, denn bei einem Ferkelkasten spielen die langfristigen Kosten eine grosse Rolle für die Rendite der Aufzucht. Schon herkömmliche Ferkelkästen weisen im Innern einen Vorhang auf, den die Ferkel unterschreiten bzw. durchschreiten können, damit sie zum Säugen in die Muttersauen-Bucht 42 gehen können und hernach wieder zurück an die im Ferkelkasten 1 herrschende Wärme. Im Ferkelkasten 1 wird die Temperatur auf 36-40°C gehalten, während in der Muttersauen-Bucht die gewöhnliche Stalltemperatur um die 15-20°C herrscht. Es wird sofort klar, dass deshalb einige gute Wärmeisolation des Ferkelkastens 1 entscheidend dafür ist, wieviel Heizkosten nötig sind, um diese Temperatur aufrecht zu erhalten. Bei den zahlreichen Ferkelkästen 1 eines Aufzugbetriebes summieren sich all diese Kosten und sind eine sehr wesentliche Einflussgrösse für die gesamten Aufzuchtkosten.

Gemäss der vorliegenden Erfindung fiel die Wahl für das Baumaterial des Ferkelkastens 1 auf Hohlkammer-Kunststoffplatten, und im Besonderen auf hohle Polyprophylen-Platten von ca. 50 mm Dicke, mit geschlossenen Längs- und Breitseiten als vorteilhafte Ausführung. Der Ferkelkasten 1 wird komplett aus solchen hohlen Polypropylen-Platten aufgebaut, indem diese miteinander durchgehend verschweisst werden. Als Alternative können auch isolierte Polypropylen- oder hohle Polyethylen-Platten oder ähnliche Kunststoff-Isolationsplatten mit Hohlräumen eingesetzt werden.

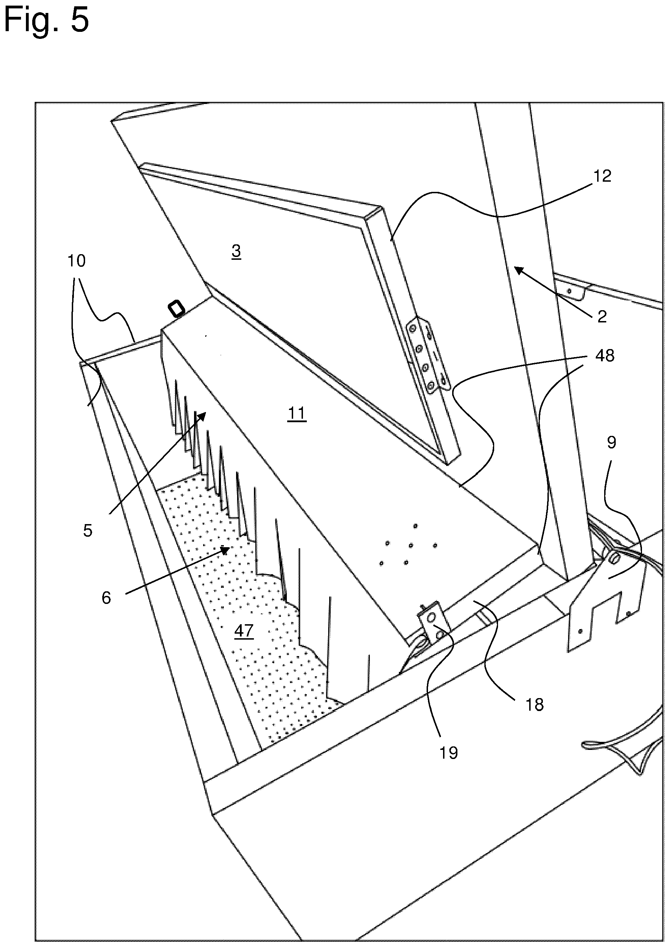

Die Figur 5 zeigt einen solchen Ferkelkasten 1 mit aufgeklapptem Deckel 2. Sein Boden besteht ebenfalls aus einer Polypropylen-Platte 47, welche genoppt ist. Wie man hier erkennt, ist unten am Deckel 2 des Ferkelkastens 1 eine Blende 11 montiert. Diese besteht ebenfalls aus einer Polypropylenplatte. Auf der Unterseite des Deckels 2 erkennt man die dort montierte elektrische Heizplatte 3. Eine Herausforderung besteht darin, die abgestrahlte Hitze der Heizplatte 3 so zu absorbieren, dass die Deckelplatte 2 sich nicht verzieht. Ohne besondere Konstruktion verzieht nämlich eine Deckelplatte 2 wegen der von der Heizplatte 3 abgestrahlten Wärme, und die unten etwa bloss mittels Schrauben montierte Blende löst sich dann stellenweise von der Unterseite des Deckels. Eine Lösung wurde darin gefunden, die Blende 11 über ihre beiden kompletten Längsränder mit der Unterseite des Deckels 2 durchgehend zu verschweissen, also auf beiden Seiten eine durchgehende Schweissnaht zur Unterseite des Deckels 2 zu legen. Die Blende 11 wird also mit einer Stirnseite unten an die Unterseite des Deckels 2 satt angeschlossen und dann wird auf beiden Seiten eine durchgehende Schweissnut 48 in die Übergangsstelle gelegt. Selbst wenn sich die Deckelplatte 2 verziehen will, so verhindert das die Blende 11 in diesem Fall zuverlässig, wenn sie in dieser Weise fest und über ihre ganze Länge mit der Unterseite des Deckels 2 verschweisst ist. Die Blende wirkt sodann als Versteifung des Ferkelkasten-Deckels 2. Alternativ kann der Ferkelkastren-Deckel 2 mit Profil verstrebt bzw. versteift werden. Solche Profile sind vorteilhaft als Chromstahl ausgeführt. Um die Gefahr des Verziehens der Deckelplatte 2 weiter zu mindern und eine Beschädigung durch Überhitzung zu verhindern, wird ein Infrarotheizelement mit isolierter Rückseite verwendet. Damit lässt sich der Kastendeckel 2 mit der Heizplatte 3 wie gezeigt realisieren, sehr kostengünstig, rasch, hitzebeständig und stabil. Dieser Aufbau ist der Schlüssel zu einer derartigen Konstruktion, komplett aus langlebigen hohlen oder bedarfsweise isolierten Polypropylen-Platten.

Als weitere Besonderheit ist der Vorhang 5, 6 zur thermischen Separierung des Ferkelkastens 1 von der Muttersauen-Bucht 42 unten an dieser Blende 11 befestigt und hängt vom unteren Rand der Blende 11 aus nach unten bis zum Boden des Ferkelkastens 1. Dieser Vorhang 5 weist im unteren Bereich eine Anzahl Schlitze auf, sodass nebeneinanderliegende Streifen 6 von 5-20 cm Breite gebildet sind. Infolge dieser Streifen 6 können die Ferkel diesen Vorhang 5, 6 durchschreiten. Oberhalb der Streifen 6 ist der Vorhang 5 doppelwandig ausgeführt, mit einer hinteren und einer vorderen Folie, die komplett miteinander über die die ganze Länge luftdicht verschweisst sind. Dieser Vorhang 5, 6 sollte nun aber bedarfsweise entfernt werden können bzw. den Bereich unterhalb der Blende 11 komplett freigeben können, damit die Wärme des Ferkelkastens 1 ungehindert in die Muttersauen-Bucht 42 strömen kann. Das Mutterschwein verspürt vor dem Abferkein die Wärme die aus dem Kasten strömt und legt sich davor. Die geborenen Ferkel finden so umgehend den Weg in den Nestbereich und werden so seltener erdrückt und kühlen weniger aus. Der Züchter kennt seine Muttersauen und erkennt zuverlässig, wann der Zeitpunkt für das Abferkeln naht. Dann sollte er mit einem einfachen Handgriff dafür sorgen können, dass die Wärme aus dem elektrisch geheizten Ferkelkasten 1 in die Muttersauen-Bucht 42 strömen kann. Dazu soll der Vorhang 5, 6 unten an der Blende 11 den Durchgang für diese Wärmeströmung freigeben.

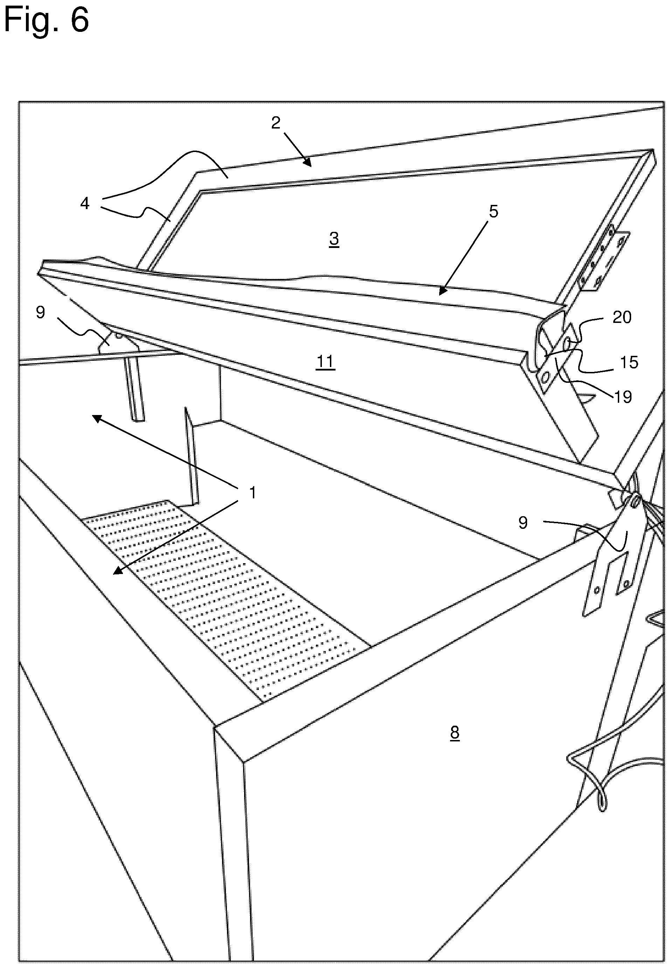

In Figur 6 ist hierzu eine erste Lösungsvariante aufgezeigt. Wie man in dieser Darstellung des Ferkelkastens 1 mit ganz hochgeklapptem Deckel 2 erkennt, ist der Vorhang 5 hier um die unteren Kante der Blende 11 hochgeschlagen und liegt im Bild auf der dann oberen Seite der Blende 11 auf. Damit er in dieser Lage gesichert ist, selbst wenn der Deckel 2 abgeklappt wird und die Blende 11 wieder eine vertikale Lage einnimmt, ist der Vorhang 5 mittels eines Rohres auf der hier oberen Seite der Blende 11 festgeklemmt. Das Rohr ist hier an Schwenkplatten 19 gehalten, die schwenkbar an den seitlichen Fronten der Blende 11 festgemacht sind, wie das noch weiter gezeigt und ausgeführt wird.

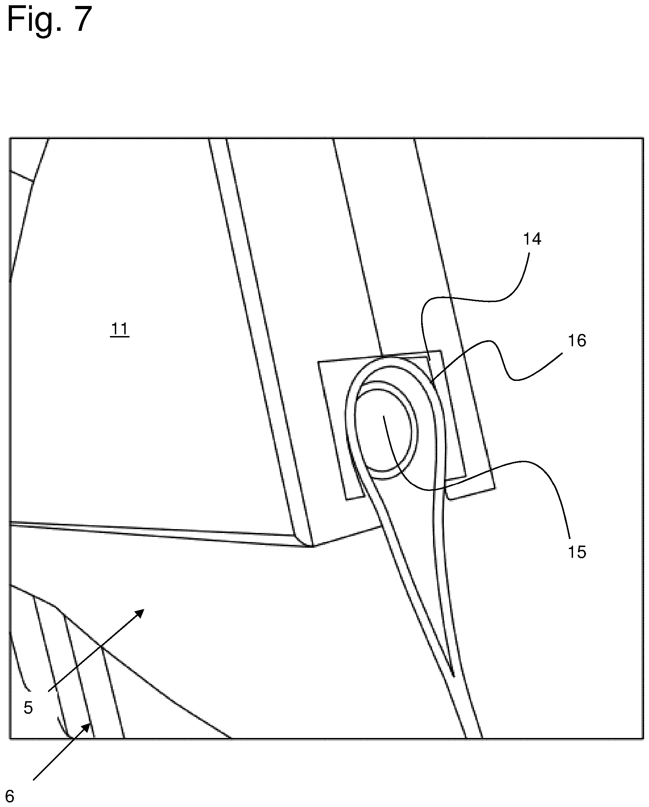

In Figur 7 ist eine Variante gezeigt, wie der Vorhang 5 unten an der Blende 11 befestigt werden kann. Im gezeigten Beispiel ist aus der unteren Stirnseite der Blende 11 eine hier im Profil rechteckige Nut 14 ausgefräst, die einen schmaleren Durchgang nach unten freilässt. Der Vorhang 5 bildet an seinem oberen Ende eine Schlaufe zur Bildung eines Hohlsaums 16, in welchen hier ein Tragrohr 15 eingesteckt ist. Der Hohlsaum 16 kann dann mitsamt dem Tragrohr 15 längs in diese Nut 14 eingefahren werden und der Vorhang 5 ist dann sicher an der Blende 11 gehalten.

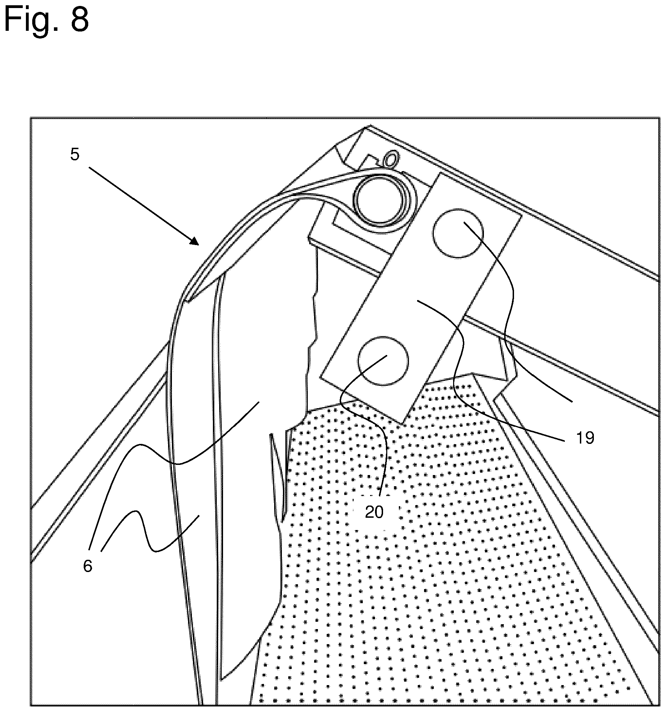

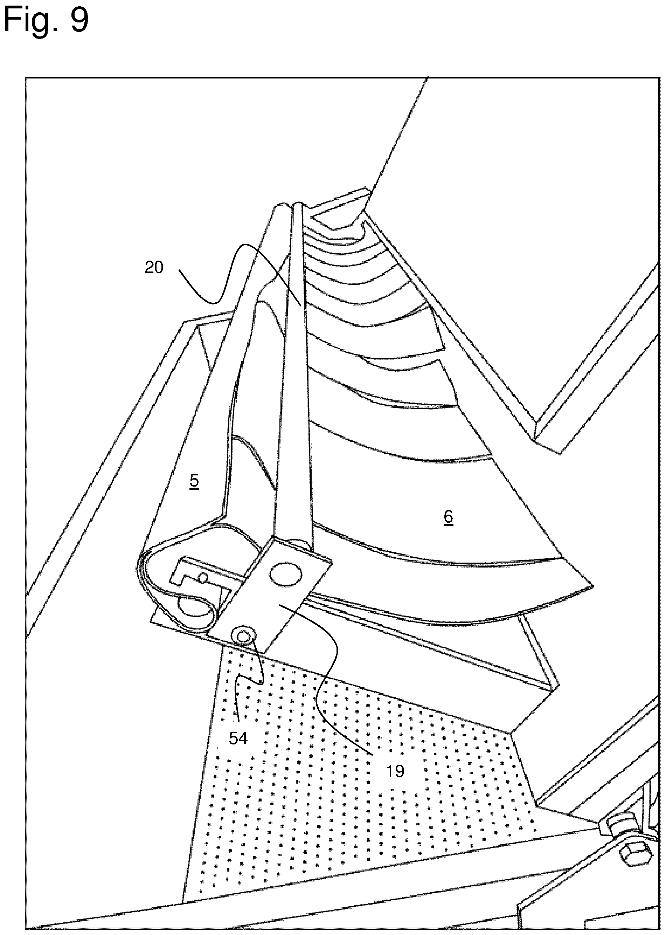

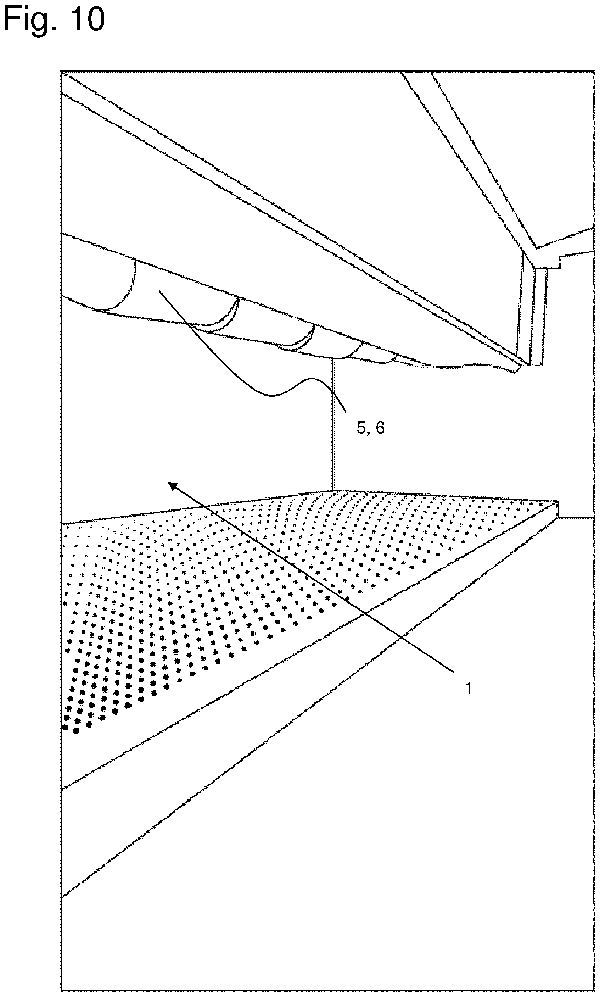

Die Figur 8 zeigt eine der beiden seitlich an der Blende 11 angebauten Schwenkplatten 19, die zwischen sich das Klemmrohr 20 tragen. Hier ragen die Schwenkplatten 19 an der Blende 11 nach unten. Aus dieser Lage wird der Vorhang 5, 6 durch Schwenken der Schwenkplatten 19 im Bild um mehr als 180° im Uhrzeigersinn mitsamt dem Klemmrohr 20 um die Schwenkbolzen 54 nach oben auf die Blende 11 umgeschlagen und das Klemmrohr 20 wird auf den umgeschlagenen Vorhang 5, 6 abgeschwenkt. Dazu kann das Klemmrohr 20 durch die Vorhangstreifen 6 hindurch etwa in der Mitte ergriffen werden und in dieser Weise hochgeschwenkt werden. Das Klemmrohr 20 kann auch mit einem Griff ausgerüstet werden, sodass es leichter ergriffen werden kann und mit den Schwenkplatten 19 um mehr als 180° hochgeschwenkt werden kann, bis es den umgeschlagenen Vorhang auf die Blende 11 klemmt. Die Figur 9 zeigt diesen Zustand nach dem nach oben Schlagen des Vorhangs 5, 6 und dem Umschwenken des Klemmrohrs 20 um die Schwenkbolzen 54. Auch wenn der Ferkelkasten-Deckel 2 wieder auf den Ferkelkasten 1 abgeklappt wird, bleibt der Vorhang 5, 6 in dieser umgeschlagenen Position festgeklemmt und hält den Durchgang unterhalb der Blende 11 frei. Die Figur 10 gewährt einen Blick von der Muttersau-Bucht aus gesehen in den Ferkelkasten 1 bei einem solchermassen hochgeschwenktem Vorhang 5, 6.

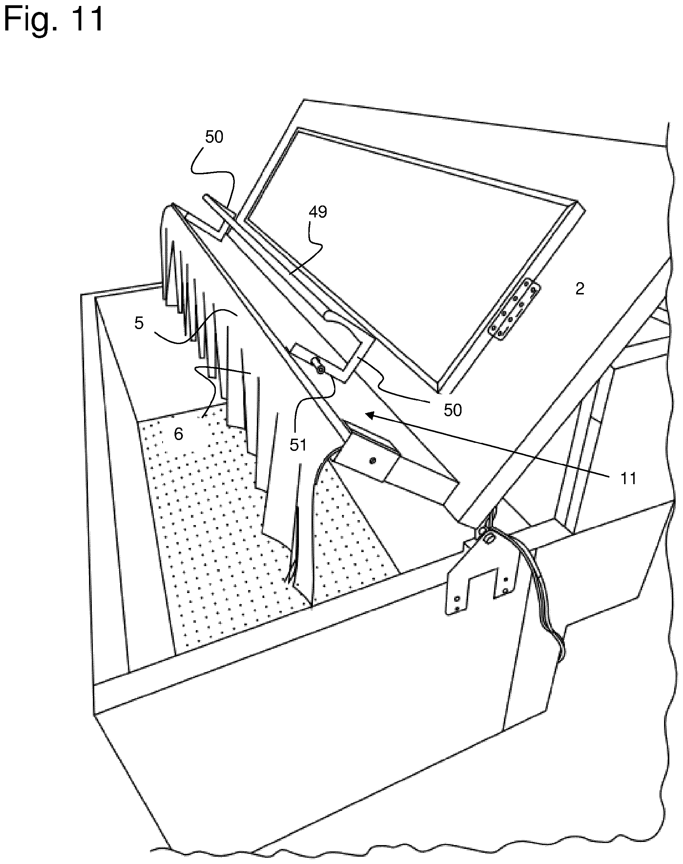

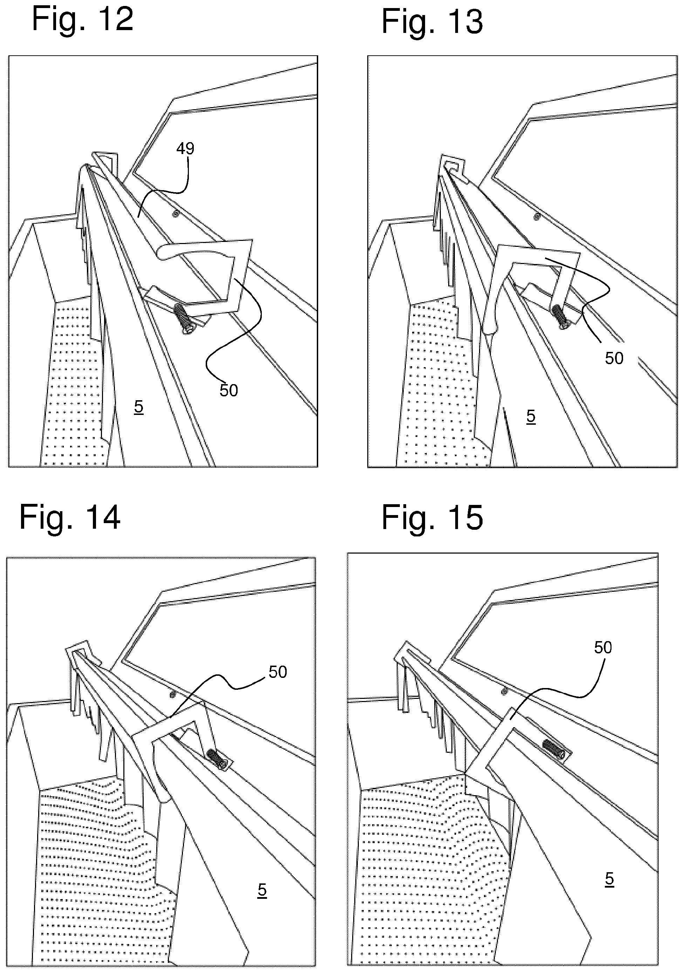

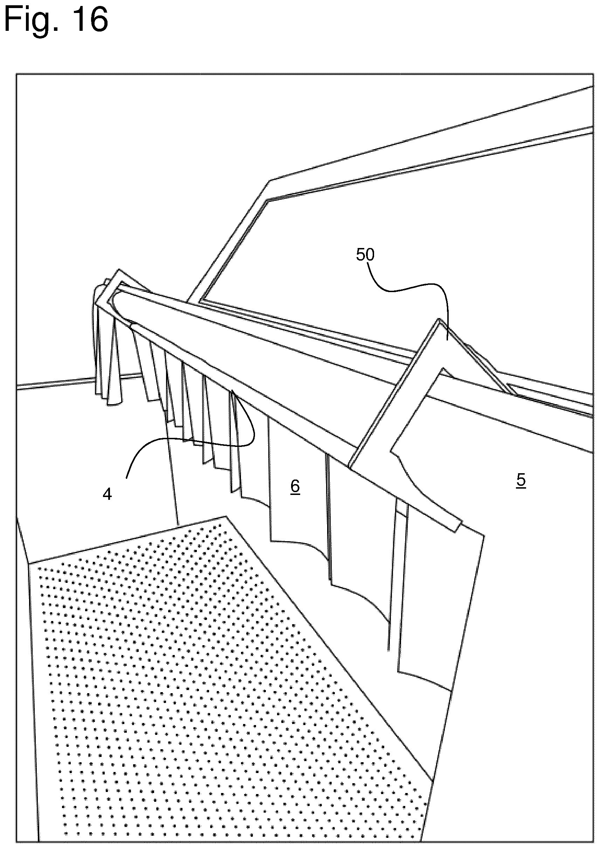

Die Figur 11 zeigt einen Ferkelkasten 1 mit aufgeschwenktem Deckel 2 und einer alternativen Klemmstange 49 an der Blende 11 für das Umschlagen des Vorhanges 5. Die Klemmstange 49 ist hier zwischen zwei U-förmigen Schwenkelementen 50 gehalten, und diese Schwenkelemente 50 sind an Winkelprofilen 51 schwenkbar gelagert, die auf der Vorderseite der Blende 11 montiert sind. Die Figuren 12 bis 15 illustrieren den Vorgang des Umschlages des Vorhanges 5, 6 und sein Festklemmen auf der Hinterseite der Blende 11. In Figur 11 ist der Ausgangszustand gezeigt, mit lose nach unten hängendem Vorhang 5, 6. In Figur 12 sind die U-förmigen Schwenkelemente 50 initial um ca. 45° im Gegenuhrzeigersinn geschwenkt werden. In Figur 13 sind diese U-förmigen Schwenkelemente 50 nach Schwenkung um ca. 90° gezeigt und die Klemmstange 49 schlägt hier an die Vorderseite des Vorhangs 5 an. Ab jetzt nimmt die Klemmstange 49 den Vorhang 5 mit bzw. schwenkt ihn nach hinten auf die Hinterseite der Blende 11, wie das in Figur 14 dargestellt ist und einsehbar ist. Schliesslich erreicht die Klemmstange 49 die Lage wie in Figur 15 gezeigt, in welcher sie auf die Hinterseite der Blende 11 umgeschwenkt ist. Die Figur 16 zeigt das noch deutlicher in einer Ansicht von weiter unten gesehen. Der Klemmeffekt wird erzeugt, indem die Schwenkelemente 50 an den Winkelprofilen 51 mit Bolzen gelagert sind, über die eine Druckfeder 52 gestülpt ist, welche vom endseitigen Schraubenkopf 53 her auf die Schwenkelemente 50 drückt und dadurch Reibung erzeugt und damit genügend Klemmkraft für die Klemmstange 49 bereitstellt.

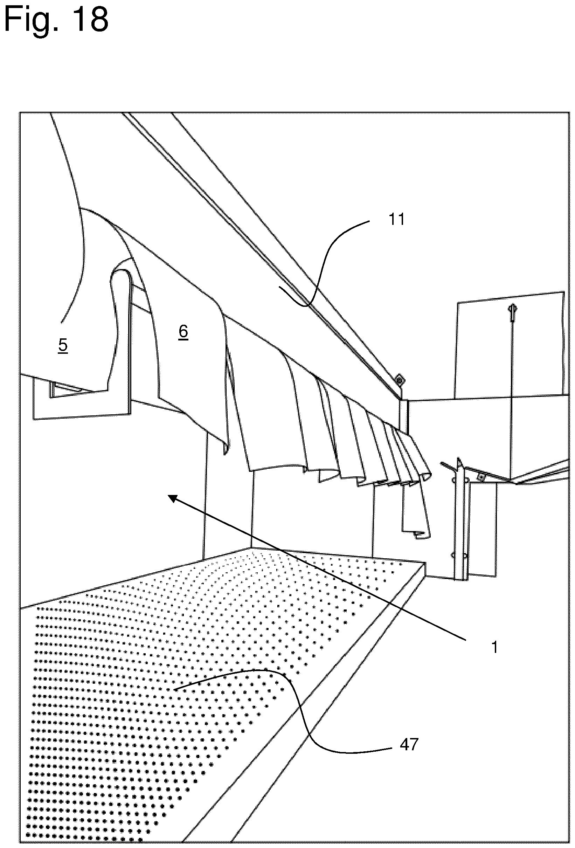

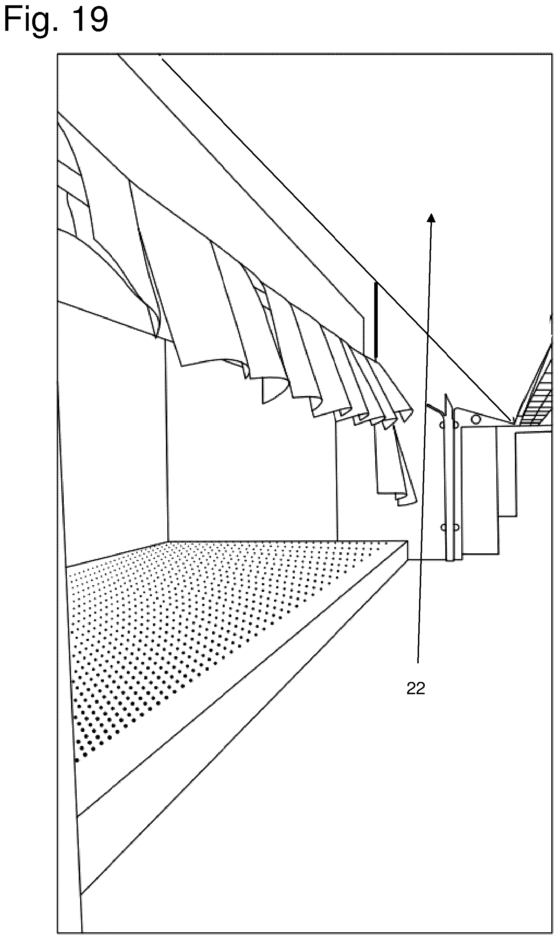

Die Figur 18 bietet einen Blick von hinten in den Ferkelkasten 1 bei umgeschlagenem Vorhang 5, 6. Die Ansicht kommt von schräg hinten in den Ferkelkasten 1 hinein gesehen. Man erkennt den Noppen-Boden 47 des Ferkelkastens 1 und die Blende 11, um welche der Vorhang 5 und seine Streifen 6 umgeschlagen sind. Der Durchgang unterhalb er Blende 11 ist freigelegt und Wärme kann ungehindert aus dem Ferkelkasten 1 in die Muttersauen-Bucht strömen, die im Bild rechts anschliesst. Die Figur 19 zeigt dieselbe Ansicht mit dem einzigen Unterschied, dass hier das Wärmeleit-Brett 22 in seine Leitlage geschwenkt wurde, sodass also die Wärme nicht nach oben entweichen kann, wie das im Zustand wie in Figur 18 gezeigt erfolgen würde.

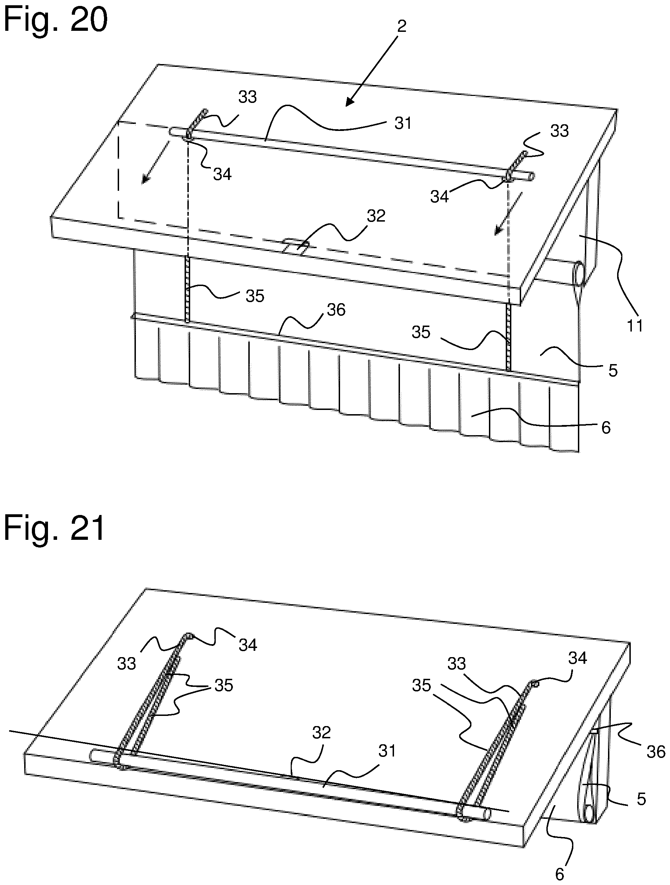

Die Figur 20 zeigt einen Ferkelkasten-Deckel 2 mit Blende 11 mit alternativer Einrichtung zum Hochziehen des Vorhanges 5, 6, wozu nicht einmal der Deckel 2 aufgeklappt werden muss. Im Bereich der halben Höhe des Vorhangs 5, 6 ist hierzu eine Zugleiste 36 vorne am Vorhang befestigt. Diese hängt an zwei voneinander beabstandeten Seilen 35. Diese Seile 35 führen oben durch je eine Durchgangsbohrung 34 im Kastendeckel 2 und dann über eine auf dem Kastendeckel 2 liegende Zugstange 31 nach hinten zu Fixierungsösen 33, die dort auf der Oberseite des Kastendeckels befestigt sind. Weil die Zugstange 31 hinter den Durchgangsbohrungen 34 liegt und unter diesen Seilen 35 hindurchgeführt ist, wirkt sie beim nach vorne Ziehen, also wenn sie im mittleren Bereich ergriffen wird und dann zum vorderen Rand des Deckels 2 hin gezogen wird, wie eine lose Rolle eines Flaschenzuges. Im Effekt werden die Seile 35 unterhalb des Kastendeckels 2 einen doppelten Weg zurücklegen wie die Zugstange 31, wobei jedoch an der Zugstange 31 mit doppelter Kraft gezogen werden muss als was das Gewicht des Vorhangs ausmacht. Hinzu kommen noch Reibungskräfte. Aber der Vorhang 5, 6 wiegt ja nicht viel und daher ist diese Lösung realisierbar. Die Bohrungen 34 im Kastendeckel 5 können mit Rohrhülsen ausgestattet werden, sodass die Seile 35 darin knapp und mit wenig Reibung geführt werden und praktisch keine Wärmeverluste durch diese Bohrungen 34 zu befürchten sind.

Die Figur 21 zeigt die Situation, wenn die Zugstange 31 nach vorne gezogen wurde und somit der Vorhang 5, 6 an der Zugleiste 36 nach oben gezogen wurde, sodass die Zugleiste 36 unten am Kastendeckel 2 anschlägt. Die Zugstange 31 wird dann vorne an einem Haken 32 eingehängt und somit ist der Vorhang 5, 6 in der hochgezogenen Position gesichert. Der Wärmedurchgang in die hinter dem Ferkelkasten anschliessende Muttersauen-Bucht ist damit gewährleistet.

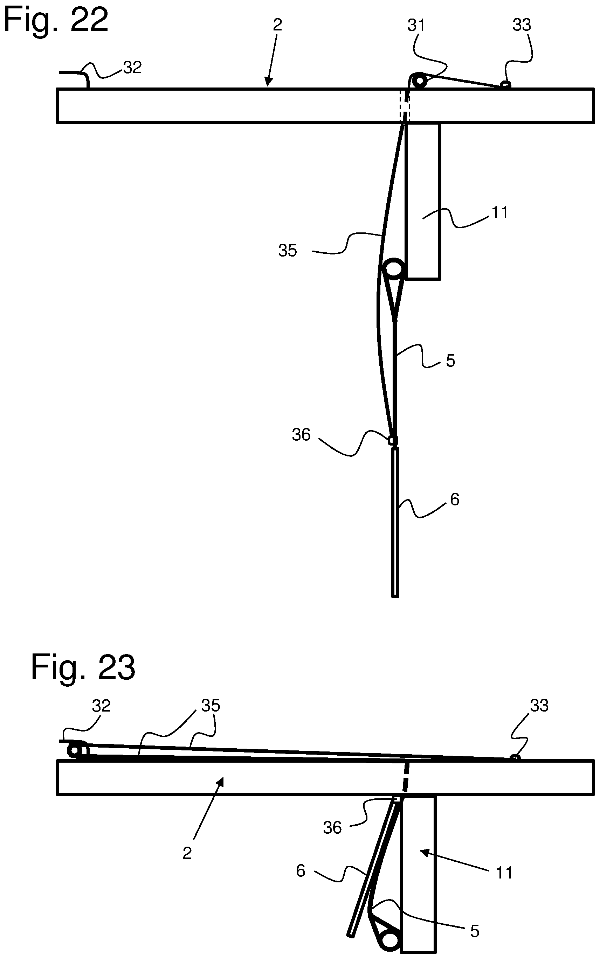

Die Figur 22 zeigt diesen Ferkelkasten-Deckel 2 mit Blende 11 wie in den Figuren 20 und 21 vorgestellt in einer Ansicht von der Seite her gesehen, bei ganz abgesenktem Vorhang 5, 6. Die Seile 35 führen von der auf den Vorhang 5 ,6 aufgeschweissten Zugleiste 36 nach oben und durch die Bohrungen 34 im Kastendeckel 2 und dann über die Zugstange 31 nach hinten zu den Befestigungsösen 33 oben am Kastendeckel 2.

In Figur 23 ist die Situation gezeigt, wenn die Zugstange 31 im Bild nach links, das heisst nach vorne zum vorderen Kastendeckel-Rand gezogen wurde. Weil sie wie eine lose Rolle eines Flaschenzuges wirkt, legt das unten liegende Seil den doppelten Weg zurück wie die Zugstange 31. In der Folge wird der Vorhang 5, 6 an der Zugleiste 36 entsprechend nach oben zu den Bohrungsmündungen hin gezogen, bis die Zugleiste 35 an der Unterseite des Kastendeckels 2 anschlägt. Die Zugstange 31 wird derweil oben an einem Haken 32 eingehängt und damit ist der Vorhang 5, 6 in dieser hochgezogenen Position gesichert. Um den Vorhang 5, 6 wieder abzusenken, wird die Zugstange 31 vom Haken 32 gelöst und nach hinten verschoben. Sie kann auch vom Deckel 2 angehoben werden, sodass die Seile 35 fast mit den Bohrungen fluchten und dann leichter durch diese Bohrungen 34 laufen und der Vorhang wird aufgrund seines Eigengewichtes abgesenkt und zieht die Seile nach, bis die Zustange 31 wieder oben auf dem Kastendeckel 2 aufliegt.

Diese Vorrichtung zum Heraufziehen und Absenken des Vorhangs 5, 6 bietet den Vorteil, dass der Kastendeckel 3 nicht einmal geöffnet werden muss, um den Vorhang 5, 6 heraufzuziehen oder abzusenken, und dass man von weitem schon sieht, ob an einem bestimmten Ferkelkasten der Vorhang aufgezogen oder abgesenkt ist.

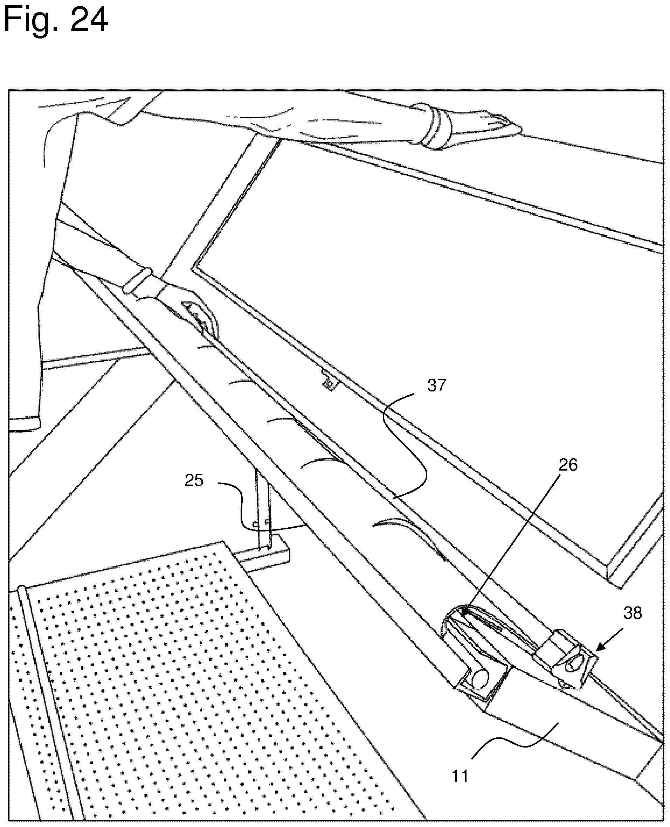

Die Figur 24 zeigt eine abermals andere Variante zum Umschlagen eines Streifenvorhangs um die Blende 11. Dazu dient eine Klemmstange 37, die an der Blende 11 an zwei oder mehr Scharnieren schwenkbar angebaut ist. In der Figur 24 ist der Kastendeckel 2 aufgeschwenkt und man sieht auch die spezielle Befestigung des Streifenvorhangs an der Blende 11. Hierzu ist unten an der Blende ein Kunststoff-Vierkantprofil 25 angebaut, durch Anschrauben, Anleimen oder Anschweissen. Dieses Vierkantprofil 25, zum Beispiel aus einem Polyester, weist über seine ganze Länge einen Schlitz 26 auf. Der Vorhang bildet an seinem oberen Ende eine Schlaufe zur Bildung eines Hohlsaums, in welche eine Haltestange eingesteckt ist. Der Hohlsaum mitsamt der Haltestange ist dann längs des Schlitzes 26 in dieses Vierkantprofil 25 eingefahren und somit darin gehalten. In dieser Figur 24 ist der Streifenvorhang nach oben auf die Blende 11 umgeschlagen. Mit einem Klemmrohr, welches in dafür vorgesehene Klemmelemente gedrückt wird, kann der umgeschlagene Vorhang fixiert werden. Diese Klemmelemente 38 sind U-förmig gestaltet, zur Aufnahme des Klemmrohres 37 von oben, und die beiden U-Schenkel der Klemmelemente 38 sind mit Gummirollen bestückt und können beim Einsetzen des Klemmrohrs 37 elastisch nach aussen ausweichen. Wenn das Klemmrohr 37 ganz in diesen U-förmigen Klemmelementen 38 steckt, neigen sich die U-Schenkel mit den Gummirollen über dem Klemmrohr 37 elastisch gegen dasselbe hin und fixieren es in dieser Weise. Mit genügend Kraft lässt es sich wieder aus diesen Klemmhalterungen 38 herausziehen.

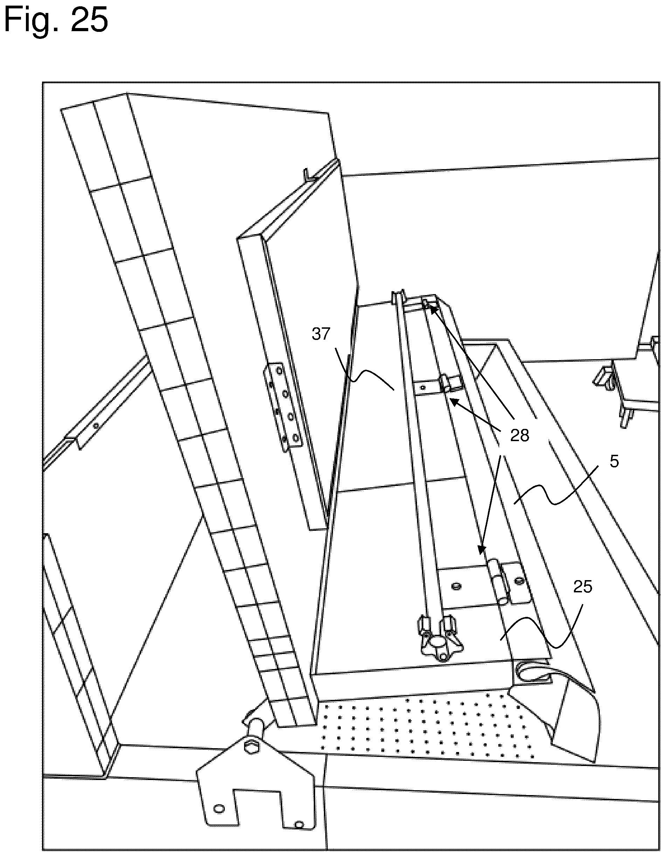

Die Figur 25 zeigt wie das Vierkantrohr mitsamt Vorhang 5 mittels drei Scharnieren 28 an der Blende 11 montiert ist. Um diese Scharniere 28 kann der Vorhang 5 geschwenkt werden. Mit dem Klemmrohr 37 wird dieser fixiert. In der Ansicht dieser Figur 25 hängt der Vorhang 5 lose von der Blende 11 hinunter in den Ferkelkasten.

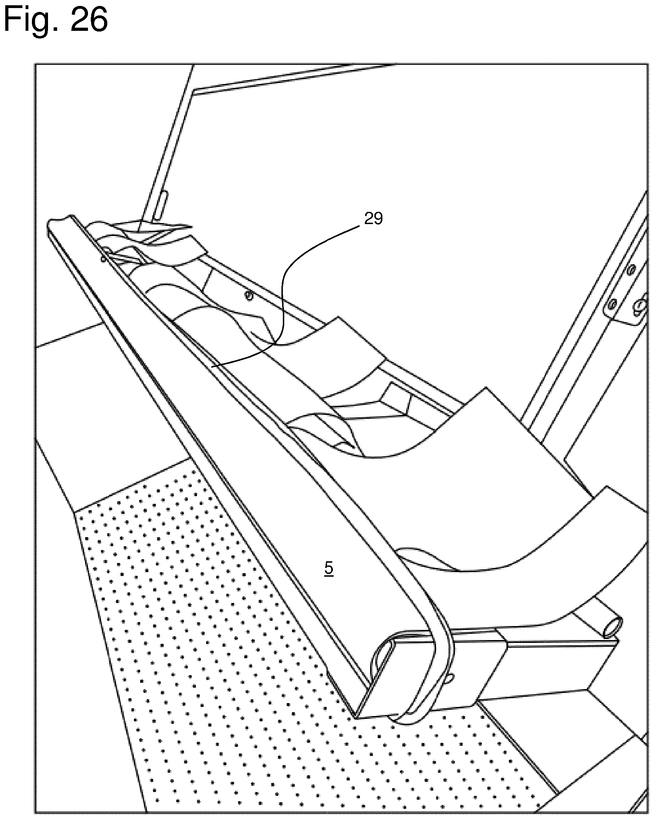

Die Figur 26 zeigt eine noch andere Möglichkeit, den umgeschlagenen Vorhang in seiner Lage zu sichern. Hier wurde einfach ein umlaufender Gummizug 29 um den unteren Bereich der Blende 11 über den Vorhang 5 aufgezogen. Dieser hält den Vorhang 5, in seiner umgeschlagenen Position fest und kann bei Bedarf rasch wieder von der Blende 11 abgezogen werden, damit der Vorhang 5 hernach wieder schlaff nach unten fällt und sich bis zum Boden in das Innere des Ferkelkastens 1 erstreckt.

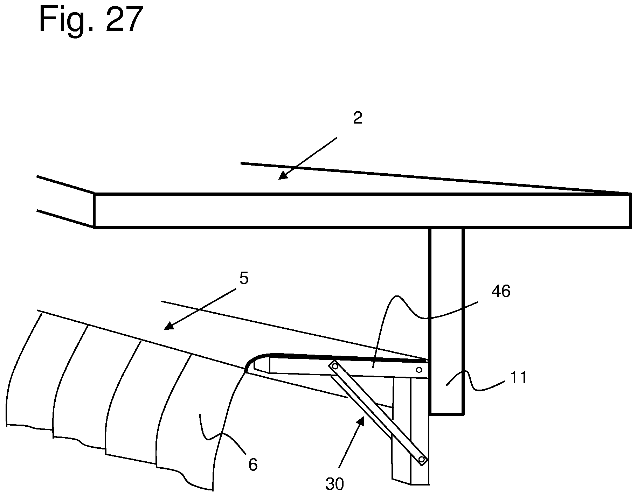

Eine noch weitere Variante ist in Figur 27 dargestellt. Hier ist an den beiden äusseren Enden der Blende 11 je ein verstellbares Regalhalter-Element 30 mit daran ausklappbarem Regalhalter 46 montiert, sowie auch mindestens ein weiteres solches Regalhalter-Element 30 im Mittelbereich der Blende 11. Durch Hochklappen dieser Regalhalter 46 aus dem nach unten geklappten Zustand wie in der Figur 27 gezeigt kann der Vorhang 5, 6 wie gezeigt hochgeschwenkt und in dieser Lage gehalten werden.

In Fällen, wo kein kompletter Ferkelkasten gewünscht ist oder wo ein herkömmlicher Ferkelkasten vorhanden ist, kann die Erfindung nutzbar gemacht werden, indem nur der Ferkelkasten-Deckel 2 mit der daran nach unten abstehenden Blende 11, beide aus Hohlkammer-Kunststoffplatten und miteinander verschweisst, und die Blende mit einem unten daran hängenden Vorhang, verwendet wird. Bedarfsweise auch ohne Vorhang, nur Deckel und Blende.

Dieser Kastendeckel 2 mit Blende 11 und Vorhang 5, 6 wird dann zur Nachrüstung eines bestehenden Ferkelkasten verwendet und ersetzt den herkömmlichen Deckel, der keine Blende mit einem daran hängenden, hochziehbaren, aufschwenkbaren oder umschlagbaren Vorhang aufweist. Damit wird das Wärmemanagement mit einem derart nachgerüsteten Ferkelkasten schon entscheidend verbessert.

Die Nutzbarmachung der Erfindung kann auch mit der Verwendung einzig eines solchen Kasten- oder Kastendeckels mit Blende und Vorhang (bedarfsweise ohne Vorhang) in einem Stall erzielt werden, ohne Zusammenwirkung mit einem ganzen Ferkelkasten. Der Kastendeckel 2 besteht aus einer Hohlraum-Kunststoffplatte mit auf seiner Unterseite einer senkrecht zu ihm stehenden, mit rundum laufenden Schweissnuten angeschweissten Blende 11 aus ebenfalls einer Hohlraum-Kunststoffplatte. Im unteren Bereich der Blende ist eine ausgefräste, vorteilhaft T-förmige Nut 14 vorhanden, in welche ein wärmeisolierender Vorhang 5 mit einem Hohlsaum 16 eingezogen wird, die am oberen Rand und im Hohlsaum 16 aufweist, in welchem eine Haltestange 15 steckt. Der Vorhang mit seinem Hohlsaum 16 und der Haltestange 15 wird in diese vorteilhaft T-förmige Nut 14 eingeführt und ist dann darin gehalten. Eine solcher blosser Kastendeckel 2 mit Blende 11 und Vorhang 5, 6 wird verwendet, indem er in einem Ferkelstall verbaut wird. Dazu wird der Kastendeckel scharnierend oder fest an eine Stallwand oder an irgendeine Zwischenwand in einem Stall angebaut. Damit wird eine wesentliche Verbesserung des Wämemanagements für die Ferkel erreicht wird, welche sich dann unterhalb dieses Katendeckels und hinter dem Vorhang 5,6 aufhalten.

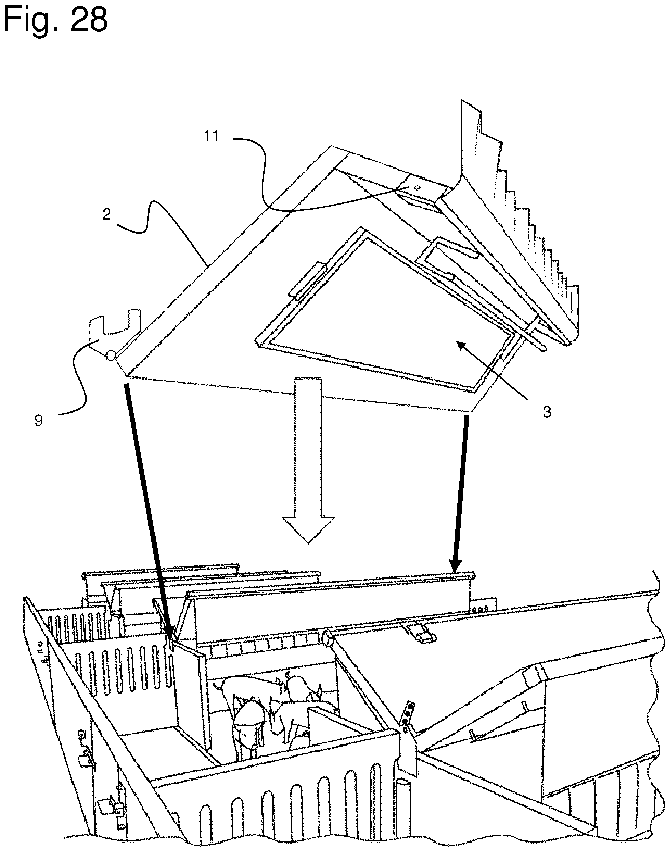

Die Figur 28 zeigt einen Blick auf die Anordnung von Ferkelkästen für den Mastbetrieb. Die Ferkelkästen sind in Reihen zu je zwei Ferkelkästen aufgestellt, und zwischen einem Paar von Ferkelästen wird je ein Freiraum gebildet für den Auslauf der Tiere. Die herkömmlichen Deckel weisen an der Vorderkante einen Vorhang auf, der bei abgeklapptem Deckel bis unten zum Boden hin reicht, und der von den Tieren unterquert werden kann, indem er unten in Streifen ausläuft. Für eine verbessertes Wärmemanagement kann nun der Kastendeckel 2 gemäss der vorliegenden Erfindung, also hergestellt aus Hohlraum Kunststoff-Platten mit unten einer daran geschweissten Blende 11 aus gleichem Material sowie mit einem Heizelement 3 unten am Deckel 2 an diesen bestehenden Ferkelkästen verwendet bzw. eingebaut werden. Dazu müssen die Scharniere 9 wie gezeigt nicht auf der Seite der Blende 11, sondern auf der gegenüberliegenden Seite montiert werden und werden an den Stellen am bestehenden Ferkelkasten montiert, auf welche die schmalen Pfeile in der Figur hinzeigen. Ein solcher Katendeckel kann mit oder ohne Vorhang an einen solchen Ferkelkasten angebaut werden.

Statt des Festmachens des Vorhangs 5, 6 an der Blende 11 des Ferkelkasten-Deckels 2 kann dieser auch direkt am Ferkelkasten-Deckel 2 befestigt werden. Hierzu kann gleichermassen eine Nut 14 direkt aus dem Deckel 2 ausgefräst werden. Gleichermassen kann ein solcher Ferkelkastendeckel mit oder ohne Vorhang auch so verwendet werden, dass er einfach in horizontaler Lage an eine Stallwand oder Zwischenwand in einem Stall montiert wird, um darunter ein Ferkelnest zu bilden.

### Ziffernverzeichnis

- 1: Ferkelkasten
- 2: Kastendeckel
- 3: Heizplatte
- 4: Unterseite des Deckels 2
- 5: Vorhang
- 6: wegschwenkbaren Streifen am Vorhang 5
- 7: wärmeisolierender Raum im Kasten 1
- 8: schmalseitige Seitenwände des Kastens 1
- 9: Scharniere an den Seitenwänden 8
- 10: oberer Rand des Kastens 1
- 11: Blende
- 12: Rahmen mit Wärmeisolationsmaterial hinter der Heizplatte 3
- 13: untere Stirnseite der Blende 11
- 14: Nut in untere Stirnseite der Blende 11
- 15: Rohr in der Nut 14
- 16: Hohlsaum oben am Vorhang 5
- 17: oberes Ende des Vorhangs
- 18: seitliche Stirnseiten der Blende 11
- 19: Schwenkhebel an der Blende
- 20: Stange zwischen den Schwenkhebeln
- 21: Griff an der Stange 20
- 22: Wärmeleit-Brett
- 23: Griffleiste an 22
- 24: Griff an 22
- 25: Polyesterschiene mit Längsschlitz 26
- 27: Rohr zum Einklicken
- 28: Scharnier unten am Rohr 27 für Polyesterschiene mit Schlitz
- 29: Gummiband zum Sichern des hochgeklappten Vorhangs
- 30: Klappbare Regalhalterung
- 31: Ziehstange, als lose Rolle funktionierend
- 32: Haken zum Einhängen der Ziehstange 31
- 33: Befestigung des Seils 35
- 34: Durchgangsbohrung für Seil 35
- 35: Seil
- 36: am Vorhang befestigte Zugleiste
- 37: Klemmstange
- 38: Klemm-Aufnahme für Befestigungsstange 37
- 39: Nach oben ragende Rahmenecken an den Seitenwänden des Kastens
- 40: Durchgang
- 41: Buchenwand
- 42: Muttersauen-Bucht
- 43: Muttersau
- 44: Futterstation und Tränke
- 45: Leitwand
- 46: klappbarer Regalhalter an Regal-Halterelement 30
- 47: Noppenmatte auf Boden
- 48: Schweissnaht
- 49: Klemmstange (Figur 11)
- 50: U-förmige Schwenkelemente
- 51: Winkelprofile für 50
- 52: Druckfeder, für Klemmkraft der U-förmigen Schwenkelemente
- 53: Schraubenkopf für Bolzen für Druckfeder 52
- 54: Bolzen für die Schwenkplatten 19
- 55: Sicherung des Wärmeableit-Brettes 22

## Patentansprüche

1. Ferkelkasten-Deckel (2) für einen oben offenen Ferkelkasten (1) für dessen Wärmemanagement, welcher Deckel (2) scharnierend auf dem Ferkelkasten (1) auf- und abschwenkbar anbaubar ist und auf seiner Unterseite (4) einen Heizkörper (3) trägt, wobei an der Unterseite (4) des Ferkelkasten-Deckels (2) ein wärmeisolierender Vorhang (5) aufhängbar ist, der im unteren Bereich in einzeln wegschwenkbare Streifen (6) ausläuft, und bei abgeschwenktem Ferkelkasten-Deckel (2) dieser mit dem Vorhang (5) einen thermisch abgetrennten Raum (7) bildet, ***dadurch gekennzeichnet,* dass** als Mittel für das Wärmemanagement mit diesem Ferkelkasten-Deckel (2) an ihm kumulativ oder alternativ folgende Merkmale vorhanden sind, nämlich:
a) dass der Ferkelkasten-Deckel (2) aus einer Hohlraum-Kunststoffplatte besteht und zu seiner Versteifung auf seiner Unterseite (4) eine senkrecht zu ihm stehende Blende (11) aufweist, die sich parallel zur Schwenkachse des Ferkelkasten-Deckels (2) über seine Länge erstreckt und welche Blende (11) mit ihrer oberen Stirnseite mit der Unterseite (4) des Ferkelkasten-Deckels (2) verschweisst ist oder der Ferkelkasten-Deckel (2) oben oder unten mit einem oder mehreren Profilen versteift ist; und/oder
b) dass in einem unteren Bereich einer senkrecht an der Unterseite des Ferkelkasten-Deckels (2) angebauten Blende (11) oder im Ferkel-Deckel (2) selbst eine Nut (14) ausgefräst ist, in welche Nut (14) der wärmeisolierende Vorhang (5) mittels eines Hohlsaums (16), in welchem eine Haltestange oder ein Halterohr (15) steckt, eingeführt und darin gehalten ist, und/oder
c) dass der wärmeisolierende Vorhang (5) an einer der senkrecht vom Ferkelkasten-Deckel (2) nach unten abstehenden Blende (11) hängt und hochziehbar oder um die Blende (11) hochschwenkbar oder darum umschlagbar ist oder dass der wärmeisolierende Vorhang (5) am Ferkelkasten-Deckel (2) hängt und hochziehbar oder hochschwenkbar ist, und der Vorhang (5) jeweils an der Blende (11) bzw. dem Deckel (2) in dieser Position festhaltbar ist, zur bedarfsweisen Freigabe des Wärmeflusses vom Innern des Ferkelkastens (1) nach draussen.

2. Ferkelkasten-Deckel (2) nach Anspruch 1, ***dadurch gekennzeichnet,* dass** die Hohlraum-Kunststoff-Platten für den Ferkelkasten-Deckel (2) und die dran angeschweisste Blende (11) hohle Polypropylen-Platten oder Kunststoff-Isolationsplatten mit Hohlräumen sind.

3. Ferkelkasten-Deckel (2) nach einem der vorangehenden Ansprüche, ***dadurch gekennzeichnet,* dass** die Heizplatte (3) auf seiner Unterseite eine mehrere Millimeter starke Wärme-Isolationsschicht (12) aus einem wärmeisolierenden Material aufweist, sodass die Heizplatte (3) entsprechend vom Ferkelkasten-Deckel (2) beabstandet ist somit ihre Strahlungswärme den Ferkelkasten-Deckel (2) nicht verzieht.

4. Ferkelkasten-Deckel (2) nach einem der vorangehenden Ansprüche, ***dadurch gekennzeichnet,* dass** der wärmeisolierende Vorhang um die auf der Unterseite des Ferkelkasten-Deckels angeschweisste Blende (11) umschlagbar ist, indem eine Klemmstange (49) zwischen den Enden der freien Schenkel von zwei U-förmigen Schwenkelementen (50) gehalten ist, und die Enden der anderen Schenkel der U-förmigen Schwenkelemente (50) schwenkbar an Winkelprofilen (51) gelagert sind, die an der Blende (11) montiert sind, und wobei ausgehend von einer Schwenkposition, in welcher die angelenkten Schenkel der U-förmigen Schwenkelemente (50) längs der Winkelprofile (51) verlaufen und die freien Schenkel und somit auch die Klemmstange (49) von der Blende (11) beabstandet liegen, und mit dieser Klemmstange (49) durch Schwenken um die Anlenkpunkte am Winkelprofil (41) der Vorhang (5, 6) auf die andere Seite der Blende (11) umschlagbar und am Ende des Schwenkbereichs den Vorhang (5, 6) im umgeschlagenen Zustand an die Blende (11) festhaltbar ist..

5. Ferkelkasten-Deckel (2) nach einem der Ansprüche 1 bis 3, ***dadurch gekennzeichnet,* dass** an den seitlichen Stirnseiten (8) der Blende (11) je ein Schwenkhebel (19) schwenkbar gelagert ist, und die unteren Enden dieser Schwenkhebel (19) zwischen sich eine Stange (20) tragen, die längs des unteren Randes der Blende (11) hinter dem an der Blende (11) hängenden Vorhang (5) verläuft, und ein Griff (21) an der Stange (20) den Vorhang (5) nach vorne durchsetzt, sodass diese an diesem Griff (21) erfasst und unter Mitnahme des vor ihr liegenden Vorhanges (5) um 180° aufschwenkbar ist und in dieser aufgeschwenkten Lage, in welcher der Vorhang (5) die Vorderseite der Blende (11) bedeckt, sicherbar ist.

6. Ferkelkasten-Deckel (2) nach einem der Ansprüche 1 bis 3, ***dadurch gekennzeichnet,* dass** im Bereich der halben Höhe des Vorhangs eine Zugleiste (36) am Vorhang befestigt ist, die an zwei voneinander beabstandeten Seilen (35) hängt, und diese Seile (35) oben durch Durchgangsbohrungen (34) im Kastendeckel (2) führen und im hinteren Bereich auf der Oberseite des Ferkelkasten-Deckels (2) befestigt sind, und eine Zugstange (31) hinter den Durchgangsbohrungen (34) unter diesen Seilen (35) hindurchgeführt ist, und die Zugstange (31) an den vorderen Rand des Ferkelkasten-Deckels (2) ziehbar und damit für die Seile (31) je als lose Rolle wirkt, sodass mit der Zugstange (31) die Zugleiste (36) mit doppeltem Weg nach oben ziehbar ist und die Zugstange (31) am vorderen Rand des Ferkelkasten-Deckels (2) an einem Haken (32) einhängbar ist.

7. Ferkelkasten-Deckel (2) nach einem der Ansprüche 1 bis 3, ***dadurch gekennzeichnet,* dass** auf der Vorderseite der Blende (11) mehrere klappbare Regalhalter-Elemente (30) montiert sind, und der Vorhang (5, 6) im abgesenkten Zustand über die Regalhalter-Elemente (30) mit abgeklappten Regalhaltern (46) nach unten ragt, und der Vorhang (5, 6) hochhebbar und in dieser Position sicherbar ist, indem die Regalhalter (46) an den Regalhalter-Elementen (30) hochklappbar sind, sodass die Regelhalter (46) senkrecht von der Blende (11) abstehen und der Vorhang (5) auf ihnen aufliegt, und somit rechtwinklig von der Blende (11) abstehend gehalten ist.

8. Ferkelkasten, einschliessend einen Ferkelkasten-Deckel (2) gemäss Anspruch 1.

9. Verwendung eines Ferkelkasten-Deckels (2) gemäss Anspruch 1 zum Nachrüsten eines herkömmlichen Ferkelkastens und damit zur wesentlichen Verbesserung des Wärmemanagements dieses Ferkelkastens.

10. Verwendung eines Ferkelkasten-Deckels (2) gemäss Anspruch 1 zum Einbau in Ferkelställen oder an Ferkelkästen an eine Wand oder Zwischenwand.
